# EUROPÄISCHE PATENTANMELDUNG

(11) **EP 1 037 187 A2**
(43) Veröffentlichungstag der Anmeldung: **20.09.2000**
(21) Anmeldenummer: 00250062.7
(22) Anmeldetag: 23.02.2000
(51) Int. Cl.: G08G 1/09

(54) **Broadcast-Point-to-Point-Informationsverfahren**

(30) Priorität: 09.03.1999 DE 19911674
(71) Anmelder: MANNESMANN Aktiengesellschaft, 40213 Düsseldorf (DE)
(72) Erfinder: Kummernuss, Thomas Dipl.-Wi.Ing., 40227 Düsseldorf (DE); Schröter, Andreas Dipl.-Ing., 40570 Meerbusch (DE)
(74) Vertreter: Meissner, Peter E., Dipl.-Ing.

(57) **Zusammenfassung**

Eine einfache, kostengünstige und ergonomische Information eines Endgerät-Nutzers (7) mit individuellen Detail-Informationen (12) wird ermöglicht durch ein Endgerät (6), eine Zentrale (1) und ein Verfahren zur individuellen Information eines Endgerät-Nutzers (7) durch Senden von Allgemein-Informationen (3) und endgerätnutzer-individuellen Detail-Informationen (12) umfassenden Informationen (3,12) von einer Informationszentrale (1) an das Endgerät (4),
- wobei über einen Broadcast-Funkkanal (2) von der Informationszentrale (1) Allgemein-Informationen (3) an das Endgerät (4) zur dortigen Darstellung (6) für den Endgerät-Nutzer (7) gesendet werden,
- wobei bei der Darstellung (6) der Allgemein-Informationen (3) für den Endgerät-Nutzer (7) auch eine Darstellung von Hinweisen (8) auf Möglichkeiten des Abrufs (10) von Paketen (12) von Detail-Informationen erfolgt,
- wobei bei einer endgerätnutzerseitigen Auswahl (8) eines Paketes (12) von Detail-Informationen automatisch vom Endgerät (4) über einen Point-to-Point-Funkkanal (11) ein Paket (12) mit Detail-Informationen von der Informationszentrale (1) angefordert (10) wird und von der Informationszentrale (1) an das Endgerät (4) über einen Point-to-Point-Funkkanal (11) übertragen wird.

## Beschreibung

Die Erfindung betrifft ein Verfahren zur individuellen Information eines Endgerät-Nutzers durch Senden von Allgemein-Informationen und endgerätnutzer-individuelle Detailinformationen umfassenden Informationen von einer Informationszentrale an das Endgerät.

Die zur Verfügung stehende Kapazität in Broadcast-Funkkanälen, wie Radio, Mobilfunk-Broadcast etc. ist begrenzt, so daß sich Informationen einem Endgerät-Nutzer nicht mit allen vorstellbaren Details darstellen lassen, die dieser zu individuellen Information wünschen könnte. Im Festnetz ist die Übertragung von Allgemein- und Detail-Information über einen Ortsbereichs-Point-to-Point-Kanal zu einem Internet-Provider bekannt. Ein derartiger individueller Kanal ist jedoch im Mobilfunk wegen der verglichen mit dem Festnetz deutlich höheren Kosten ungeeignet.

Aus der DE 196 08 538 C1 ist ein Informationssystem bekannt, bei welchem über einen Rundfunk-Broadcast-Kanal Allgemein-Informationen verschlüsselt von einer Informationszentrale an ein Endgerät übertragen werden, wobei das Endgerät die Allgemein-Informationen nur entschlüsseln und damit darstellen kann, wenn auf eine Anfrage des Endgerätes bei der Zentrale über einen Point-to-Point-Kanal hin von der Zentrale an das Endgerät ein Schlüssel zur Entschlüssung der verschlüsselt gespeicherten Allgemein-Informationen übertragen wird. Die Allgemein-Informationen sind dabei höchstens insofoern als individuell auf die Detailwünsche des Endgerät-Nutzers individualisiert betrachtbar, als dieser aus ihnen, ohne sie zu kennen, über die Anfrage eines bestimmten Schlüssels auswählen kann. Daß somit alle möglichen Detail-Informationen verschlüsselt über den Broadcast-Kanal übertragen werden müssen, steht wegen der begrenzten Kapazität auch von Broadcast-Kanälen einer beliebigen Detaillierung der Information und damit einer individuellen Ausrichtung auf Wünsche des Benutzers entgegen. Auch ist problematisch, daß der Endgerät-Nutzer nicht bei der Auswahl von Informationen unterstützt wird, da die Allgemein-Informationen verschlüsselt sind.

Aufgabe der vorliegenden Erfindung ist, durch Ausnutzung vorhandener Kanal-Kapazitäten einen Endgerät-Nutzer mit möglichst individuellen und/oder detaillierten Detail-Informationen einfach, ergonomisch und kostengünstig zu versorgen. Die Aufgabe wird durch die Gegenstände der unabhängigen Ansprüche gelöst.

Da die Übertragung von Allgemein-Informationen zur Darstellung im Endgerät in unverschlüsselter Form erfolgt, kann der Endgerät-Nutzer zu bestehenden Möglichkeiten zur Detail-Information, zu deren Inhalt, zu deren Abrufung etc. informiert werden. Dies ermöglicht eine sehr ergonomische Information des Endgerät-Nutzers. Da die Allgemein-Informationen über einen sehr kostengünstigen oder kostenlosen Broadcast-Funkkanal an alle gesendet werden, während über einen Point-to-Point-Funkkanal mit geringerer Kapazität und höheren Kosten lediglich spezifisch ein Paket mit vom Endgerät-Nutzer gewünschten und ausgewählten Informationen übertragen wird, ist das Verfahren sehr kostengünstig und effizient. Detailinformationen werden nur insofern übertragen, als sie vom Endgerät-Nutzer gewünscht werden. Detailinformationen können auch Menüs und/oder Untermenüs, insbesondere graphische Menü-/Untermenü-Oberflächen, enthalten. Darstellbare Allgemein-Informationen im Sinne der Ansprüche können insbesondere graphische Oberflächen enthalten oder sein, die Informationen für den Endgerät-Nutzer und/oder Menü-Steuerungs-Informationen und/oder bei einer Anfrage über den Point-to-Point-Funkkanal zur Abfrage-Spezifizierung mitsendbare Informationen zu einer möglichen Auswahl eines Paketes enthalten. Darstellbar sind Informationen insbesondere dann, wenn sie ohne Schlüsselabruf zu ihrer Entschlüsselung darstellbar sind.

Darstellbare Allgemein-Informationen und überdies vorzugsweise auch darstellbare Detail-Informationen können optisch und/oder akustisch darstellbar sein. Vorteilhaft ist insbesondere eine optische Darstellung, welche die Darstellung von manuell oder akustisch betätigbaren Software-Schaltern zu einem Paket zu dessen Anforerung über den Point-to-Point-Kanal umfassen.

Als Point-to-Point-Funkkanal kann insbesondere ein Mobilfunk-Kurznachrichten-Point-to-Point-Kanal, wie GSM-SM, ein Mobilfunk-Sprachkanal (über TCH), ein Mobilfunk-Datenkanal (beispielsweise TCH-Kanal für Faxübertragung) verwendet werden. Als Broadcast-Funkkanal kann ein Mobilfunk-Kurznachrichten-Broadcast-Kanal, wie GSM-SM-CB, ein digitaler Radiokanal, ein analoger Radiokanal oder ein sonstiger Funkkanal verwendet werden.

Der Point-to-Point-Funkkanal zur Anforderung von Detail-Informationen ist vorzugsweise der gleiche wie zur Übertragung der Detailinformationen von der Zentrale an das Endgerät. Im Falle eines Point-to-Point-Funkkanals kann beispielsweise eine Kurznachricht zur Anforderung einer Detailinformation vom Endgerät an eine Zentrale und darauf eine Kurznachricht mit den angeforderten Detail-Informationen von der Zentrale an das Endgerät übertragen werden.

Weitere Merkmale und Vorteile der Erfindung ergeben sich aus der nachfolgenden Beschreibung eines Ausführungsbeispiels anhand der Zeichnung. Dabei zeigt
- Fig. 1: schematisch die Übertragung von Allgemein-Informationen über einen Broadcast-Funkkanal und von Detail-Informationen über einen Point-to-Point-Kanal und
- Fig. 2: ein Beispiel mit einer Verkehrs-Informationszentrale.

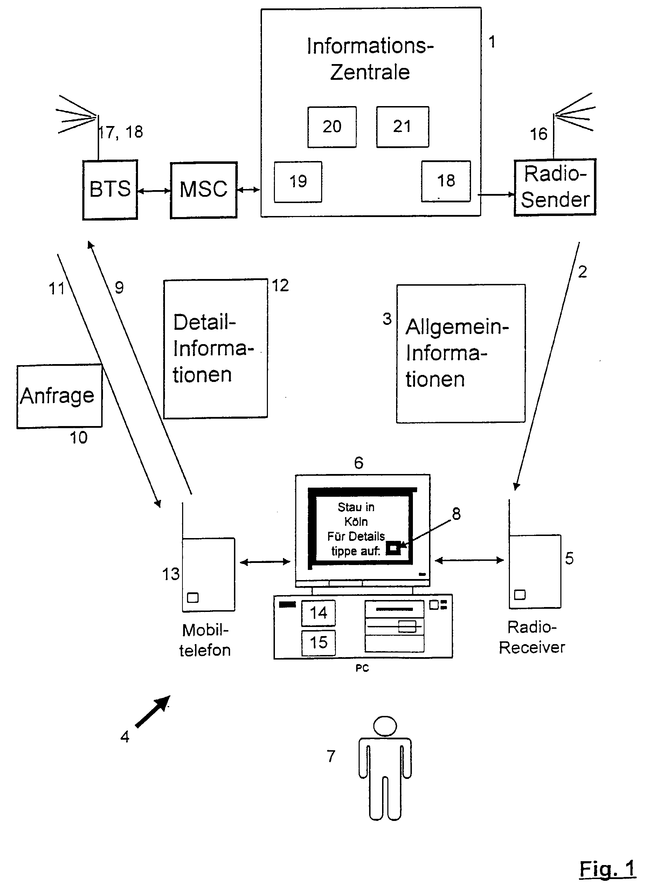

In Fig. 1 sendet eine Informationszentrale, hier eine Verkehrs-Informationszentrale 1, über einen Cellbroadcast-Kanal (also einen von einer Vielzahl von Teilnehmern empfangbaren, unverschlüsselten oder verschlüsselten und im letzteren Fall mit im Endgerät vorhandenen Schlüsseln entschlüsselbaren Kanal 2) Allgemein-Informationen 3 an ein Endgerät 4 mit einem Empfänger 5 für Informationen des Cellbroadcast-Kanals 2. Auf einem Terminal 6 des Endgerätes 4 werden über den Cellbroadcast-Kanal 2 übermittelte Allgemein-Informationen 3 dem Endgerät-Nutzer 7 optisch dargestellt. Beispielsweise kann dem Endgerät-Nutzer optisch dargestellt werden, daß in seiner Umgebung (=in Köln) auf Autobahnen Staus detektiert wurden und daß er mit dem Software-Button 8 Details zu diesen Informationen anfordern kann. Wenn der Endgerät-Nutzer 7 den Software-Button 8 (= deutsch: Software-Schalter 8) betätigt, indem er auf diese Stelle tippt, die Zahl 8 eintippt, eine akustische Eingabe gibt etc., kann er über einen Point-to-Point-Kanal 9 bei der Zentrale 1 Detail-Informationen 12 anfordern 10. Der Point-to-Point-Kanal 9 kann beispielsweise ein Kurznachrichtenkanal, wie GSM-SM, sein. Mit der Anfrage 10 über den Point-to-Point-Kanal 9 können beispielsweise die Anfrage spezifizierende Details übertragen werden, die das Endgerät mit den Informationen 3 zum Software-Button 8 erhielt und die beispielsweise die Umgebung des Endgerätes (Köln), die Art der angeforderten Informationen (Stau-Informationen), deren Identität etc. spezifiziert. Über den gleichen Point-to-Point-Kanal 9 oder einen anderen Point-to-Point-Kanal 11 (beispielsweise ebenfalls GSM-SM) werden die angeforderten Detail-Informationen 12 (betreffende den Software-Button 8) von der Zentrale 1 an das Endgerät 4 übertragen. Die Detail-Informationen 12 können optische oder akustisch darstellbare Informationen enthalten. Sie können insbesondere Verkehrsinformationen enthalten; Verkehrsinformationen können insbesondere Informationen über die aktuelle Verkehrslage, über eine prognostizierte Verkehrslage, über Navigations-Informationen für einen Endgerät-Nutzer 7 mit oder ohne Berücksichtigung der aktuellen und/oder prognostizierten Verkehrslage sein. Die Auswahl der Detail-Informationen 12 in der Zentrale 1 auf eine Anfrage 10 hin kann die aktuelle Position des Endgerätes berücksichtigen, wenn diese im Endgerät erfaßt wird (mit GPS etc.) oder im Mobilfunknetz erfaßt wird (in Form der aktuellen Funkzelle etc.) und mit der Anfrage 10 übertragen wird.

Welche Informationen genau ein Paket enthalten soll, muß nicht in der Anfrage eines Paketes angegeben sein und kann der Zentrale überlassen sein. Ein Paket kann auch als Datensatz oder Datensequenz bezeichnet werden.

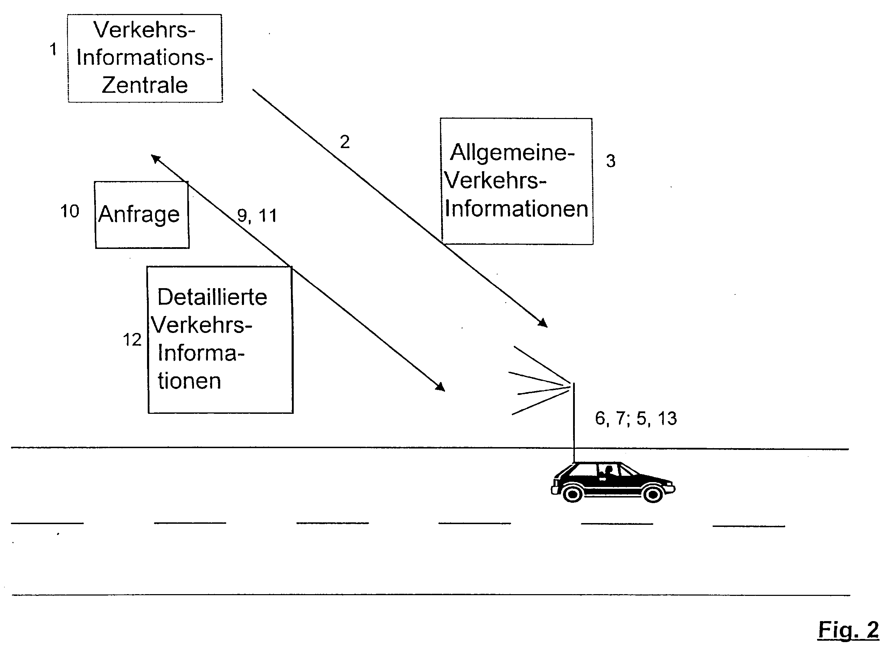

Fig. 2 zeigt ein Beispiel, in welchem die Informations-Zentrale 1 eine Verkehrs-Informationszentrale ist, wobei die Allgemein-informationen 3 und detaillierte Informationen 12 Verkehrsinformationen sind. Der Endgerät-Nutzer fährt dabei in einem Kraftfahrzeug in einem Straßenverkehrsnetz. Im Kraftfahrzeug ist das Endgerät 4, 6 mit den Sendern/Empfängern 5, 13 eingebaut.

Der Allgemein-Informationsempfänger 5 kann dabei insbesondere ein analoges oder digitales Radio sein.
Der Detail-Informationsempfänger und -sender 13 kann insbesondere ein Mobilfunkgerät (z.B. gemäß GSM, UMTS etc.) sein.

Das Verfahren kann mit einer Schaltung oder alternativ mit einem Prozessor und einem Programm realisiert werden.

## Patentansprüche

1. Verfahren zur individuellen Information eines Endgerät-Nutzers (7) durch Senden von Allgemein-Informationen (3) und endgerätnutzer-individuellen Detail-Informationen (12) umfassenden Informationen (3,12) von einer Informationszentrale (1) an das Endgerät (4),
- wobei über einen Broadcast-Funkkanal (2) von der Informationszentrale (1) Allgemein-Informationen (3) an das Endgerät (4) zur dortigen Darstellung (6) für den Endgerät-Nutzer (7) gesendet werden,
- wobei bei der Darstellung (6) der Allgemein-Informationen (3) für den Endgerät-Nutzer (7) auch eine Darstellung von Hinweisen (8) auf Möglichkeiten des Abrufs (10) von Paketen (12) von Detail-Informationen erfolgt,
- wobei bei einer endgerätnutzerseitigen Auswahl (8) eines Paketes (12) von Detail-Informationen automatisch vom Endgerät (4) über einen Point-to-Point-Funkkanal (11) ein Paket (12) mit Detailinformationen von der Informationszentrale (1) angefordert (10) wird und von der Informationszentrale (1) an das Endgerät (4) über einen Point-to-Point-Funkkanal (11) übertragen wird.

2. Verfahren nach Anspruch 1,
dadurch gekennzeichnet,
daß der Point-to-Point-Funkkanal eine geringere Übertragungskapazität als der Broadcast-Funkkanal hat.

3. Verfahren nach einem der Ansprüche 1 oder 2,
dadurch gekennzeichnet,
daß als Point-to-Point-Funkkanal zur Anforderung eines Paketes ein Mobilfunk-Kurznachrichtenkanal verwendet wird.

4. Verfahren nach einem der Ansprüche 1 oder 2,
dadurch gekennzeichnet,
daß als Point-to-Point-Funkkanal zur Anforderung eines Paketes ein Mobilfunk-Sprachkanal verwendet wird.

5. Verfahren nach einem der Ansprüche 1 oder 2
dadurch gekennzeichnet,
daß als Point-to-Point-Funkkanal zur Anforderung eines Paketes ein Mobilfunk-Datenkanal verwendet wird.

6. Verfahren nach einem der vorhergehenden Ansprüche,
dadurch gekennzeichnet,
daß als Point-to-Point-Funkkanal zur Übertragung eines angeforderten Paketes ein Mobilfunk-Kurznachrichtenkanal verwendet wird.

7. Verfahren nach einem der vorhergehenden Ansprüche,
dadurch gekennzeichnet,
daß als Point-to-Point-Funkkanal zur Übertragung eines angeforderten Paketes ein Mobilfunk-Sprachkanal verwendet wird.

8. Verfahren nach einem der Ansprüche 1 bis 5,
dadurch gekennzeichnet,
daß als Point-to-Point-Funkkanal zur Übertragung eines angeforderten Paketes ein Mobilfunk-Datenkanal verwendet wird.

9. Verfahren nach einem der vorhergehenden Ansprüche,
dadurch gekennzeichnet,
daß als Kanal zur Anforderung eines Paketes der gleiche Kanal verwendet wird wie zur Übertragung eines angeforderten Paketes.

10. Verfahren nach einem der vorhergehenden Ansprüche,
dadurch gekennzeichnet,
daß zur Übertragung der Allgemein-Informationen ein Mobilfunk-Cellbroadcast-Kanal verwendet wird.

11. Verfahren nach einem der Ansprüche 1 bis 9,
dadurch gekennzeichnet,
daß zur Übertragung der Allgemein-Informationen ein digitaler Radiokanal (DAB) verwendet wird.

12. Verfahren nach einem der vorhergehenden Ansprüche,
dadurch gekennzeichnet,
daß als Kanal zur Übertragung der Allgemein-Informationen ein analoger Radiokanal verwendet wird.

13. Verfahren nach einem der vorhergehenden Ansprüche,
dadurch gekennzeichnet,
daß ein Paket Verkehrsinformationen zur aktuellen Verkehrslage und/oder Verkehrsprognosen und/oder Navigationshinweise enthält.

14. Verfahren nach einem der vorhergehenden Ansprüche,
dadurch gekennzeichnet,
daß ein Paket Verkehrsinformationen zu einem den Ort des Endgerät-Nutzers umgebenden Gebiet enthält.

15. Verfahren nach einem der vorhergehenden Ansprüche,
dadurch gekennzeichnet,
daß ein Paket Verkehrsinformationen zu einer vom Endgerät-Nutzer eingegebenen geplanten Route enthält.

16. Verfahren nach einem der vorhergehenden Ansprüche,
dadurch gekennzeichnet,
daß die Darstellung akustisch erfolgt.

17. Verfahren nach einem der vorhergehenden Ansprüche,
dadurch gekennzeichnet,
daß die Darstellung optisch erfolgt.

18. Verfahren nach Anspruch 17,
dadurch gekennzeichnet,
daß die Darstellung der Allgemein-Informationen optische, betätigbare Software-Schalter (8) betreffend jeweils ein Paket von Detail-Informationen umfaßt, bei deren (8) Betätigung vom Endgerät an die Zentrale eine Anfrage betreffend ein dem Software-Schalter zugeordnetes Paket abgesendet wird.

19. Verfahren nach einem der vorhergehenden Ansprüche,
dadurch gekennzeichnet,
daß bei einer Anfrage eines Paketes ein Endgerät-Nutzer-Code und/oder Identitätsdaten übertragen werden.

20. Verfahren nach einem der vorhergehenden Ansprüche,
dadurch gekennzeichnet,
daß bei der Anfrage über den Point-to-Point-Funkkanal Anfragespezifizierungs-Informationen betreffend ein angefordertes Paket vom Endgerät an die Verkehrsinformationszentrale übertragen werden, welche Anfragespeziflzierungs-Informationen das Endgerät über den Broadcast-Funkkanal mit Zuordnung zu dem Paket oder zugeordneten Software-Schalter (8) erhalten hat.

21. Verfahren nach einem der vorhergehenden Ansprüche,
dadurch gekennzeichnet,
daß die Allgemein-Informationen unverschlüsselt gesendet werden.

22. Verfahren nach einem der Ansprüche 1 bis 20,
dadurch gekennzeichnet,
daß im Endgerät die Allgemein-Informationen ohne Abruf eines Schlüssels über den Point-to-Point-Kanal durch einen im Endgerät gespeicherten oder vom Endgerät-Nutzer abfragbaren Schlüssel darstellbar sind.

23. Verfahren nach einem der vorhergehenden Ansprüche,
dadurch gekennzeichnet,
daß die Allgemein-Informationen und die individuellen Detail-Informationen Verkehrsinformationen sind, daß die Informationszentrale eine Verkehrs-Informationszentrale ist und daß das Endgerät ein Verkehrsinformations-Endgerät ist.

24. Endgerät mit
- einer Empfangseinrichtung (5) zum Empfangen von Allgemein-Informationen über einen Broadcast-Funkkanal,
- einer Empfangseinrichtung (13) zum Empfangen von Detail-Informationen (12) über einen Point-to-Point-Kanal,
- einer Sendeeinrichtung (13) zum Senden einer Anfrage nach Detail-Informationen an eine Zentrale (1),
- einer Ausgabeeinrichtung (6) zum Darstellen von Informationen für einen Endgerät-Nutzer (7),
- einer Schaltung oder einem Prozessor (14) zum Bearbeiten eines in einem Speicher (15) im Endgerät (4) gespeicherten Programms zur Durchführung des Verfahrens nach einem der Ansprüche 1 bis 23.

25. Zentrale (1) mit
- einer Sendeeinrichtung (16) zum Senden von Allgemein-Informationen über einen Broadcast-Kanal (2),
- einer Sendeeinrichtung (17) zum Senden von Detail-Informationen (12) an ein Endgerät (4) über einen Point-to-Point-Funkkanal (11),
- einer Empfangseinrichtung (17) zum Empfangen einer Anfrage (10) eines Endgerätes nach Detail-Informationen (12) über einen Point-to-Point-Kanal (9),
- einem Speicher (18) für zu sendende Allgemein-Informationen und einem Speicher (19) für zu sendende Detail-Informationen,
- einer Schaltung oder einem Prozessor (20) zum Bearbeiten eines in einem Speicher (21) gespeicherten Programms zur Durchführung des Verfahrens nach einem der vorhergehenden Ansprüche.
